# EUROPEAN PATENT APPLICATION

(11) **EP 1 256 948 A2**
(43) Date of publication of application: **13.11.2002**
(21) Application number: 02009391.0
(22) Date of filing: 07.05.2002
(51) Int. Cl.: G11B 7/26, B25B 11/00

(54) **Method for maintaining flatness, flatness maintaining unit and device, and disc manufacturing method and device**

(30) Priority: 11.05.2001 JP 2001142337; 01.08.2001 JP 2001233920; 26.12.2001 JP 2001394071
(71) Applicant: DAINIPPON INK AND CHEMICALS, INC., Itabashi-ku Tokyo (JP)
(72) Inventor: Ebisawa, Shouei, Kounosu-shi, Saitama-ken (JP); Tsunematsu, Norio, Ageo-shi, Saitama-ken (JP); Matsumoto, Masaaki, Okegawa-shi, Saitama-ken (JP)
(74) Representative: Banzer, Hans-Jörg, Dipl.-Ing.

(57) **Abstract**

A method is presented for maintaining a plate member in a flat state, including the steps of placing the plate member on a surface of a supporting member, the surface of the supporting member being in a flat state and having at least one hole penetrating through the surface, and sucking air from a back side of the surface of the supporting member to generate an airflow flowing from a front side of the surface towards the back side thereof via the hole so as to retain the plate member on the surface of the supporting member. In this manner, the plate member, such as disc substrates adhered together by using an ultraviolet curable composition, can be accurately maintained in a flat state without damaging the surface thereof.

## Description

### BACKGROUND OF THE INVENTION

### 1. Field of the invention

The present invention relates to a method for maintaining flatness, a flatness maintaining unit, a flatness maintaining device, a disc manufacturing method and a disc manufacturing device. More specifically, the present invention relates to a method, a unit, and a device for maintaining flatness of a plate member, such as a disc substrate, and further to a method for manufacturing a disc and a device for manufacturing a disc by which two disc substrates are adhered together using an ultraviolet curable composition as an adhesive to form a disc.

### 2. Background art

Conventionally, a method for maintaining a flat surface of a plate member is adopted, in particular, to prevent deformation of the plate member, especially, of a thin plate member, which is easily bent by the weight thereof, when it is transported or stored for a long period of time, for instance. In such a method, a supporting member having a smooth plane, which is a criterion for flatness, is generally employed, and a plate member is brought into close contact with the smooth plane of the supporting member and retained. Various kinds of maintenance methods have been developed to make close contact with a supporting member depending on the size, shape, and properties of a plate member.

Such a flatness maintaining method is also adopted as a method for preventing deformation, besides deformation over time due to the weight of the plate member, caused when the member is subjected to a treatment, such as a heating, coating, or adhesive application treatment. Also, various improvements have been made to the method depending on the type of treatment.

For instance, when two disc substrates are adhered together using a cationic type ultraviolet curable composition to produce a digital versatile disc (DVD), the ultraviolet curable composition is applied to at least one of the disc substrates and the two disc substrates are superimposed so as to sandwich the ultraviolet curable composition. Then, ultraviolet light is radiated onto the ultraviolet curable composition to cure the composition so that the two disc substrates adhere together.

In general, the cationic type ultraviolet curable composition is not cured immediately after the radiation of the ultraviolet light, and it takes a certain amount of time before the curing of the composition gradually progresses and completes. For this reason, it is necessary to accurately maintain the two superimposed disc substrates in a flat state after the radiation of the ultraviolet light until the curing process progresses to a certain degree, otherwise, the disc may be bent or distorted which deteriorates the accuracy in the shape of the produced disc.

As a method for accurately maintaining the disc substrates in a flat state, sandwiching the disc substrates between relatively hard flat surfaces may be considered. However, if a hard substance is contacted with the surface of the disc substrate, there is a danger that the surface of the disc substrate will be damaged. Also, if the hard substance is repeatedly used and contacted, there is a problem in that foreign materials tend to become attached to the surfaces of the disc substrates.

U.S. Patent No. 5,684,778 discloses a method in which a force is applied in a direction for correcting the bend of an optical information recording medium, when the recording medium, having a recording thin film layer which exhibits a phase transition between the crystal phase and the amorphous phase formed on a substrate, is manufactured, by pressing the recording medium against a flat face or applying forces from both sides of stacked recording media during an ultraviolet light curable process of a protective layer and an initialization process of a recording layer. However, in this method also, there is a problem in that the recording medium may be damaged or foreign substances may attach to the surface of the medium.

Also, as for a method of maintaining a disc substrate, EP 0 865 038, for instance, discloses a method in which a disc substrate is placed on a supporting element so as to cover a concave opening portion formed on the supporting element and generate a vacuum area via the concave opening portion. By using this method, however, since a strong force is applied to the disc substrate due to the vacuum generation process, there is a danger that damage, such as deformation, scratches, or the attachment of dust, may be inflicted on the disc substrate.

### SUMMARY OF THE INVENTION

Accordingly, an object of the present invention is to provide a method and a device by which a plate member may be accurately maintained in a flat state without inflicting damages, such as scratches and attachment of foreign substances, on the surface of the plate member.

Another object of the present invention is to provide a method and a device by which a disc substrate may be accurately maintained in a flat state without inflicting damages, such as scratches and attachment of foreign substances, on the surface of the disc member.

In order to achieve the above objects, the present invention provides a method for maintaining a plate member in a flat state, including the steps of placing the plate member on a surface of a supporting member, the surface of the supporting member being in a flat state and having at least one hole penetrating through the surface, and sucking air from a back side of the surface of the supporting member to generate an airflow flowing from a front side of the surface towards the back side of the surface via the hole so as to retain the plate member on the surface of the supporting member.

The present invention also provides a flatness maintaining unit for a plate member, including a supporting member having a flat surface provided with at least one hole penetrating through the flat surface; and an air-suction device provided with the supporting member, the air-suction device drawing air to generate an airflow flowing from a front side of the flat surface towards a back side of the flat surface via the hole so that the plate member is retained on the flat surface of the supporting member when the plate member is placed on the supporting member.

According to the present invention, since the plate member is pressed against and retained by the supporting member using the air pressure generated by the airflow, it becomes possible to maintain the plate member in a flat state by exerting a weak force on the plate member without contacting any objects on the surface of the plate member. Accordingly, the plate member may be accurately maintained in a flat state without damaging the surface thereof by scratches or the attachment of foreign particles.

Also, since the airflow flows from the front side of the supporting member to the back side thereof, no pressure difference is caused between the front side and the back side. Accordingly, there is no danger that a strong suction force which can cause deformation of the plate member, such as flexure or bending, will be exerted on the plate member.

According to the method for maintaining flatness in accordance with an embodiment of the present invention, in a state in which a plate member is placed on an upper surface of a supporting member having a penetrating hole, air is sucked from a lower side of the supporting member to generate an airflow flowing from the upper side of the supporting member to the lower side thereof.

For the case where the plate member is a disc substrate, in particular, it is preferable to generate an airflow at both the inner and outer periphery portions of the disc substrate.

According to this method, it becomes possible to apply air pressure to both the inner and outer periphery portions of the disc substrate and to make the force pressing the disc substrate against the surface of the supporting member uniform in the radial direction of the disc substrate, and this is preferable in terms of preventing the generation of a bend or distortion of the disc substrate.

In addition, it is preferable that a surface roughness Ra of the supporting member be 3.0 µm or less.

If a projection caused by impurities during a refining process or by small remaining pieces of a raw material, or a hole resulting from the displacing of the projection, is present on the surface of the supporting member, there is a danger that a scratch may be generated on the plate member when the plate member maintained on the surface of the supporting member makes contact with the surface of the supporting member. By making the surface roughness Ra of the supporting member 3.0 µm or less, however, it becomes possible to prevent the generation of a scratch on the surface of the plate member.

The above-mentioned configuration is effective, especially for the case where the above-mentioned plate member is a disc substrate, since even a minor scratch generated on the surface of the disc substrate makes the substrate defective. By adopting the above-mentioned configuration, it becomes possible to increase the yield of products.

Also, if the above plate member is retained by the supporting member at a first point, and the plate member is removed from the supporting member at a second point after moving the supporting member along a transfer path, the configuration is applicable to a continuous process and the productivity can be improved. Also, if the supporting member is moved at a predetermined rate for a predetermined distance, the plate member can be maintained in a flat state for a predetermined period of time. Hence, automation of the process becomes possible.

In particular, if another plate member is placed on the supporting member at the second point, where the first plate member was removed from the supporting member, so as to repeat the same process, it becomes possible to effectively carry out continuous production of the product.

Also, if a plurality of the supporting members for retaining the plate members are disposed on the above-mentioned transfer path of the supporting member, it becomes possible to improve the production efficiency.

Moreover, it is preferable that an electric fan be integrally provided with the supporting member at the back of the supporting member and that a contacting electrode for supplying electricity to the fan be disposed on the transfer path so that the above-mentioned airflow may be generated by operating the fan when the supporting member is moved along the transfer path.

According to this method, it becomes possible to stably maintain the retention force of the supporting member for the plate member even when the supporting member is moving along the transfer path. Also, although it is difficult to provide wiring for supplying electricity to the fan which moves together with the supporting member along the transfer path, the supply of electricity to the fan becomes easy if the contacting electrode is disposed on the transfer path.

Also, when electric power is supplied to the fan via the contacting electrode on the transfer path, it is preferable that a DC voltage be intermittently supplied to the fan.

Since the fan can be operated at low voltage if a direct current is supplied thereto, risk is reduced by supplying the direct current to the fan. Also, since the contacting electrode tends to easily wear out when used for supplying electricity, the degree of wear of the electrode may be decreased by intermittently supplying electricity to the fan. Note that although the supply of electricity to the fan is intermittently stopped in the manner mentioned above, it is possible to maintain the retaining force of the supporting member for the plate member by appropriately setting the period of stopping the supply of electricity to the fan since the blades of the fan can be rotated by inertia when electricity is not supplied thereto.

When electricity is intermittently supplied to the fan, it is preferable that the supporting member be intermittently moved along the transfer path and a DC voltage be supplied to the fan when the supporting member is stopped.

It becomes possible to effectively reduce the degree of wear of the contacting electrode by supplying electricity to the fan when the supporting member is stopped.

Also, it is preferable that the acceleration, and the deceleration (i.e., acceleration when reducing the speed), of the supporting member while intermittently moving along the above-mentioned transfer path be 500 cm/sec² or less.

When the supporting member is intermittently moved along the transfer path, a retained plate member may "dance" on the supporting member, since the plate member on the supporting member tends to move slightly when the supporting member is accelerated or decelerated during the intermittent movement, especially when a plurality of supporting members are disposed on the transfer path at the same time and the supporting members make contact with, or collide against, each other during an acceleration and deceleration process of the intermittent movement. Accordingly, by adopting a configuration in which the acceleration and deceleration of the supporting member during the intermittent movement are adjusted to be 500 cm/sec² or less, it becomes possible to prevent the plate member from dancing on the supporting member by decreasing the force exerted on the plate member during the acceleration and deceleration processes and the impulsive force generated when the supporting members make contact with each other. Therefore, it becomes possible to prevent the generation of scratches on the plate member caused by the contact of the plate member with the supporting member. Also, if a configuration is adopted in which the acceleration and deceleration of the supporting member during the intermittent movement are decreased to be 500 cm/sec² or less and the surface roughness Ra of the supporting member is decreased to be 3.0 µm or less, it becomes possible to more effectively prevent the generation of scratches on the plate member.

The method for maintaining flatness according to an embodiment of the present invention is particularly appropriate for the case where the above-mentioned plate member is a disc substrate.
That is, the disc manufacturing method according to an embodiment of the present invention is a method in which two disc substrates are adhered together using an ultraviolet curable composition as an adhesive to form a disc. The disc manufacturing method includes steps of: applying the ultraviolet curable composition onto at least a part of an adhering surface of at least one of the disc substrates; radiating an ultraviolet light onto the applied ultraviolet curable composition; superimposing the two disc substrates so as to sandwich the ultraviolet curable composition; spreading the ultraviolet curable composition between the disc substrates; and maintaining the two disc substrates in a flat state using a method for maintaining a plate member in a flat state according to the present invention, the two disc substrates are used as the plate member.

The disc manufacturing method according to an embodiment of the present invention is particularly appropriate for the case where the above-mentioned disc is a DVD.

In the manufacture of a disc, such as a DVD, although there are strict requirements for the surface conditions of the disc, it becomes possible to produce a disc having an excellent surface accuracy which satisfies the above requirements, if the disc substrate is pressed against the supporting member using air pressure to maintain the flat state thereof so as to prevent damage on the surface of the disc substrate, such as scratches or the attachment of foreign substances.

Also, the method for maintaining flatness according to an embodiment of the present invention, since a plate member is supported by airflow flowing from a front side to a back side of the supporting member through holes provided with the supporting member, has a cooling effect for the plate member due to the generated airflow. Accordingly, the method for maintaining flatness of the present invention can also be applied to a process in which the plate member, such as a disc substrate made of plastic, is cooled without being bent or distorted after a molding process.

The method for maintaining flatness according to an embodiment of the present invention can be suitably carried out by using a flatness maintaining unit for a plate member having the following configuration. That is, the flatness maintaining unit according to an embodiment of the present invention includes: a supporting member having a flat surface provided with at least one hole penetrating through the flat surface; and an air-suction device provided with the supporting member, the air-suction device drawing air to generate an airflow flowing from a front side of the flat surface towards a back side of the flat surface via the hole so that the plate member is retained on the flat surface of the supporting member when the plate member is placed on the supporting member.

According to the above flatness maintaining unit, it becomes possible to generate an airflow flowing from the upper side of the supporting member to the lower side thereof by sucking air from the lower side of the supporting member. Accordingly, since the plate member can be maintained so as to press the plate member against the supporting member using air pressure generated by the airflow, it becomes possible to maintain the plate member using weak force without contacting any object with the surface of the plate member. Therefore, it becomes possible to maintain the plate member accurately in a flat state without inflicting damage on the surface thereof, such as scratches or the attachment of foreign substances.

In particular, for the case where the above-mentioned plate member is a disc substrate, it is preferable that the supporting member have a first penetrating hole which is larger than a central hole of the disc substrate, and have either a structure in which at least a part of the outer periphery portion of the disc substrate is located outside an edge of the supporting member when the disc substrate is placed on the supporting member so as to superimpose the center of the disc substrate on the center of the first penetrating hole, or another penetrating hole provided at a position where it is superimposed with the outer periphery of the disc substrate.

According to the above configuration of the supporting member, since air pressure may be exerted on both the inner and outer periphery portions of the disc substrate, and the force pressing the disc substrate against the surface of the supporting member may be made uniform in the radial direction of the disc substrate by placing the center of the disc substrate so as to be superimposed on the center of the above-mentioned first penetrating hole, the use thereof is preferable in terms of preventing the generation of a distortion or bend of the disc substrate.

Also, if the diameter of the first penetrating hole is made larger than 15 mm, a second penetration holes are provided at positions along the circumference of a circle which is concentric with the first penetrating hole and has a diameter of 80 mm, and the edge of the supporting member is located within another circle which is concentric with the first circle and has a diameter of 120 mm, or a third penetrating holes are provided at positions along the circumference of the circle having a diameter of 120 mm, the configuration may be applicable to both a disc substrate having an outer diameter of 80 mm, and a disc substrate having an outer diameter of 120 mm. Accordingly, air pressure may be exerted on both the inner and outer periphery portions of the disc substrate regardless of the type thereof.

Also, it is preferable that the surface roughness Ra of the surface of the supporting member be 3.0 µm or less. If such a configuration is adopted, it becomes possible to prevent the generation of scratches on the plate member when the plate member, which is retained on the supporting member, makes contact with the supporting member. In particular, the above-mentioned configuration is effective, especially for the case where the above-mentioned plate member is a disc substrate, since even a minor scratch generated on the surface of the disc substrate makes the substrate defective. By adopting the above-mentioned configuration, it becomes possible to increase the yield of products.

The method for maintaining flatness according to an embodiment of the present invention may be performed by using a flatness maintaining device having the following structure. That is, the flatness maintaining device according to an embodiment of the present invention includes a flatness maintaining unit according to an embodiment of the present invention, a transfer path along which the flatness maintaining unit moves, a mounting device which places a plate member on the surface of the supporting member of the flatness maintaining unit at a first point on the transfer path, and a removing device which removes the plate member from the supporting member of the flatness maintaining unit at a second point on the transfer path. The flatness maintaining unit of the present invention having the above configuration is suitable for performing a continuous process, and can contribute to improving the productivity. Also, it becomes possible to automate the process.

If the above-mentioned transfer path forms a circulation path, connecting the first and the second point, and another plate member is mounted at the first point after the first plate member is removed at the second point, the flatness maintaining unit can be repeatedly used and continuous production can be efficiently carried out.

Also, if a structure is adopted which makes it possible to dispose a plurality of flatness maintaining units on the transfer path, it becomes possible to improve the manufacturing efficiency.

Moreover, for the case where the supporting member is moved along the transfer path, it is preferable that an electric fan, which is used as an air suction means, be integrally provided with the supporting member and that contacting electrodes for supplying electricity to the fan be disposed on the transfer path.

According to this configuration, it becomes possible to stably maintain the retention force of the supporting member for the plate member even when the supporting member is moving along the transfer path. Also, electric power can be easily supplied to the fan which is moved together with the supporting member along the transfer path.

Moreover, it is preferable to dispose a means for intermittently moving the flatness maintaining unit along the transfer path.

If the supporting member is intermittently moved along the transfer path, it becomes possible to supply a DC voltage to the fan while the supporting member is stopped to intermittently supply electric power to the fan. By supplying electric power to the fan via the contacting electrodes while the supporting member is stopped, it becomes possible to effectively reduce the wear of the electrodes.

Also, it is preferable that a control means be provided which is capable of controlling the acceleration and the deceleration of the supporting member to 500 cm/sec² or less when it intermittently moves along the transfer path.

According to the flatness maintaining device having the above-mentioned configuration, the force exerted on the plate member, which is retained on the supporting member, during the acceleration or deceleration of the flatness maintaining unit, or the impulsive force generated when the flatness maintaining units make contact with each other, may be decreased. Accordingly, it becomes possible to prevent the plate member on the supporting member from moving or dancing so that the generation of scratches on the plate member caused by contact of the plate member with the supporting member may be prevented. Also, if a configuration is adopted in which the acceleration and deceleration of the flatness maintaining unit during the intermittent movement is decreased to 500 cm/sec² or less and the surface roughness Ra of the supporting member is decreased to 3.0 µm or less, it becomes possible to more effectively prevent the generation of scratches on the plate member.

The disc manufacturing method according to an embodiment of the present invention may be carried out by using a disc manufacturing device having the following configuration. That is, the disc manufacturing device, which manufactures a disc by adhering two disc substrates together using an ultraviolet curable composition as an adhesive, according to an embodiment of the present invention includes: an application unit which applies the ultraviolet curable composition onto at least a part of an adhering surface of at least one of the disc substrates; an ultraviolet light radiation unit which radiates an ultraviolet light onto the applied ultraviolet curable composition; a unit which superimposes the two disc substrates so as to sandwich the ultraviolet curable composition; a spreading unit which spreads the ultraviolet curable composition between the disc substrates; and a flatness maintaining device for a plate member of the present invention, the two disc substrates are used as the plate member.

In the manufacturing of a disc, although there are strict requirements for the surface conditions of the disc, it becomes possible, by using a flatness maintaining device of the disc manufacturing device according to an embodiment of the present invention, to produce a disc having an excellent surface accuracy which satisfies the above requirements since the disc substrate is pressed against the supporting member by air pressure to maintain the flat state thereof so as to prevent damage on the surface of the disc substrate, such as scratches or the attachment of foreign substances.

### BRIEF DESCRIPTION OF THE DRAWINGS

Some of the features and advantages of the invention having been described, others will become apparent from the detailed description which follows, and from the accompanying drawings, in which:
FIG. 1 is a diagram showing a schematic structure of a manufacturing device of an optical disc according to a first embodiment of the present invention;
FIG. 2 is a diagram showing a schematic structure of a flatness maintaining device used in the first embodiment of the present invention;
FIG. 3A is a diagram showing a plan view of a flatness maintaining unit; and FIG. 3B is a diagram showing a side view thereof; and
FIG. 4 is a diagram showing a schematic structure of a flatness maintaining device according to a second embodiment of the present invention.

### DESCRIPTION OF THE PREFERRED EMBODIMENTS

The invention summarized above and defined by the enumerated claims may be better understood by referring to the following detailed description, which should be read with reference to the accompanying drawings. This detailed description of a particular preferred embodiments, set out below to enable one to build and use one particular implementation of the invention, is not intended to limit the enumerated claims, but to serve as a particular example of the invention.

A first embodiment according to the present invention will be described using, as an example, a case where a disc, such as a DVD, is produced.

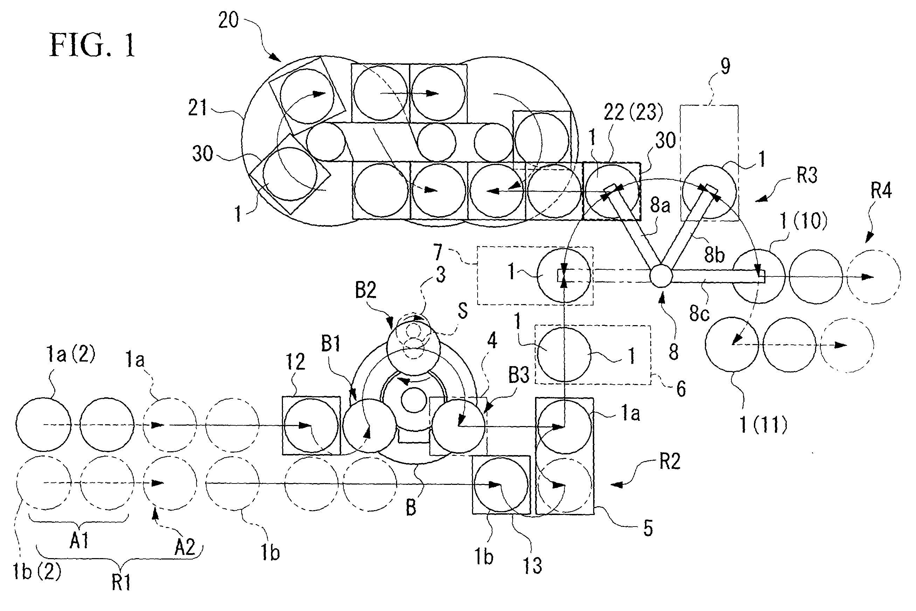

FIG. 1 is a schematic diagram showing the structure of a DVD manufacturing device according to an embodiment of the present invention. In FIG. 1, the device includes a disc substrate inlet unit R1, a disc producing unit R2, a disc inspection unit R3, and a disc outlet unit R4, all of which are accommodated in a housing not shown in the figure.

The disc substrate inlet unit R1 includes a stock area A1 and a take-out area A2. In the stock area A1, two disc substrates 1a and 1b, which are to be bonded so as to be one disc (a DVD) are separately stored in disc holders 2 in a stacked state. In the take-out area A2, the disc substrates 1a and 1b, which are retained in the disc holders 2, are taken out one by one.

The disc producing unit R2 includes an application device (an application means) 3, an ultraviolet light radiation device (an ultraviolet light radiation means) 4, an adhering device (an adhering means) 5, a spreading device (a spreading means) 6, an edge treatment device 7, a flatness maintaining device 20, and a transfer device 8. The application device 3 applies a cationic type ultraviolet curable composition onto an adhering surface of the disc substrate 1a. The ultraviolet light radiation device 4 radiates ultraviolet light onto the disc substrate 1a onto which the cationic type ultraviolet curable composition has been applied. The adhering device 5 adheres the disc substrate 1a, onto which the cationic type ultraviolet curable composition has been applied, to the disc substrate 1b to produce a disc 1. The spreading device 6 spreads the ultraviolet curable composition between the disc substrates 1a and 1b The edge treatment device 7 carries out an edge treatment process for the disc 1 which has been subjected to the process of spreading the composition. The flatness maintaining device 20 maintains the disc 1, which has been subjected to the edge treatment process, in a flat state for a predetermined period of time. The transfer device 8 transfers the disc 1, which has been maintained in a flat state, to the disc inspection unit R3 and to the disc outlet unit R4.

The disc inspection unit R3 includes a disc inspection device 9 which inspects the disc 1 and determines the quality of the disc 1. The disc outlet unit R4 includes a non-defective product outlet part 10 which transfers a disc 1, which has been determined to be non-defective, to a subsequent process, and a defective product outlet part 11 which transfers a disc 1, which has been determined to be defective, to a subsequent process.

Next, the manufacturing processes of the disc 1 using a DVD manufacturing device having the above-mentioned configuration will be explained.

First, the disc substrates 1a stacked in the stock area A1 are supplied to the disc producing unit R2. In the stock area A1, a plurality of the disc substrates 1a are stacked on the disc holder 2 and when the disc holder 2 is moved from the stock area A1 to the take-out area A2, the disc substrate 1a located at the top of the stack is transferred to a substrate supply position B1 on an application stage B by a conveyance means which is not shown in the figure.

When the disc substrate 1a is conveyed to the application stage B, it is turned over by a reversing device 12. This is because the disc substrates 1a are stored with their adhering surfaces facing downward in the stock area A1 in order to prevent the attachment of foreign materials or particles onto the adhering surfaces. The same is also applied to the disc substrates 1b. The disc substrates 1b are turned over by the reversing device 12 when conveyed to the adhering device 5.

The disc substrate 1a, which has been transferred to the substrate supply position B1, is moved to an adhesive composition application position B2 when the application stage B is rotated in the direction indicated by the arrow shown in FIG. 1. A cationic type ultraviolet curable composition S is applied to the adhering surface of the disc substrate 1a, which has been moved to the adhesive composition application position B2, by the application device 3 so as to be in a ring shape which forms a concentric circle with the disc substrate 1a. Note that a composition having a light absorption coefficient of about 2 × 10³ m⁻¹ or less in a wavelength region between about 310-340 nm is used as the cationic type ultraviolet curable composition S. Such an ultraviolet curable composition may be obtained by selectively using a material having a relatively small light absorption coefficient at 350 nm or less as a photopolymerization initiator.

The disc substrate 1a on which the cationic type ultraviolet curable composition S has been applied is transferred to a substrate transfer position B3 when the application stage B is further rotated. The disc substrate 1a which has been moved to the substrate transfer position B3 is temporarily stopped at this position, and ultraviolet light is radiated from the ultraviolet light radiation device 4 towards the cationic type ultraviolet curable composition S. The disc substrate 1a, onto which the ultraviolet light was radiated is transferred to the adhering device 5 by a transfer means not shown in the figure.

In the adhering device 5, the disc substrate 1b, which has been transferred from the take-out area A2 by a transfer means not shown in the figure and turned over, is put on standby, and the disc substrates 1a and 1b are bonded with their adhering surfaces facing each other via the cationic type ultraviolet curable composition S so as to form the disc 1.

The disc 1 is transferred to the spreading device 6 by a transfer means not shown in the figure. In the spreading device 6, the central hole of the disc 1 is held and rotated at a high speed in the circumferential direction thereof so that a process of spreading the cationic type ultraviolet curable composition is carried out by centrifugal force. In this manner, the cationic type ultraviolet curable composition is spread between the disc substrates 1a and 1b to form a layer having a uniform thickness.

During this process, the center of the disc substrate 1a is aligned with that of the disc substrate 1b by aligning the central hole of the disc substrate 1a with that of the disc substrate 1b.

After the process of spreading the cationic type ultraviolet curable composition, the disc 1 is transferred to the edge treatment device 7, and light containing ultraviolet rays and heat rays (infrared rays) is flashed from both sides of the disc 1. At that time, the light is also radiated onto the edge portion of the disc 1 by using, for instance, a reflection mirror. In this manner, curing of the cationic type ultraviolet curable composition S in the vicinity of the edge portion of the disc 1 is enhanced to prevent the composition from being forced out from the end face, and the time required for curing the entire cationic type ultraviolet curable composition S can be reduced by heating the composition using the heat rays.

After being subjected to the process by the edge treatment device 7, the disc 1 is transferred to the flatness maintaining device 20. The flatness maintaining device 20 includes a transfer path 21 of a predetermined length and a plurality of flatness maintaining units 30 which move on the transfer path 21 at a predetermined speed. A supporting member 37 of a flat plate shape having holes 35 and 36 is disposed on the top of the flatness maintaining unit 30, and the disc 1 is retained, in a flat state, on the supporting member 37 by means of air-suction using a fan 34 which is accommodated in the flatness maintaining unit 30. The disc 1 is first transferred onto the flatness maintaining unit 30 located at a start point (a first point) 22 of the transfer path 21 and is retained on the supporting member 37 of the flatness maintaining unit 30 in a flat state.

While the flatness maintaining units 30 move on the transfer path 21 to an end point (a second point) 23, the disc 1 on the flatness maintaining unit 30 is maintained in a flat state for a predetermined period of time so that curing of the cationic type ultraviolet curable composition proceeds to bind the disc 1.

After being subjected to the process in the flatness maintaining device 20, the disc 1 is removed from the flatness maintaining unit 30 at the end point 23 and is transferred to the disc inspection device 9.

Note that the transfer path 21 forms a circulation path in this embodiment, and the start point (the first point) 22 and the end point (the second point) 23 of the transfer path 21 are located at the same position. After the disc 1 is removed from the flatness maintaining unit 30 at a point which is the start point 22 as well as the end point 23, another disc 1 is mounted on the flatness maintaining unit 30.

According to this embodiment, the transfer device 8 is used as a means for transferring the disc 1 from the edge treatment device 7 to the flatness maintaining device 20, and from the flatness maintaining device 20 to the disc inspection device 9. Also, the disc 1 is transferred to either the non-defective product outlet part 10 or the defective product outlet part 11 from the disc inspection device 9 by the transfer device 8.

The transfer device 8 has three arms 8a, 8b, and 8c which are actuated in a synchronized manner, and when the disc 1 is transferred to the flatness maintaining device 20 from the edge treatment device 7 by the arm 8a, another disc 1 is removed from the flatness maintaining unit 30, which has arrived at the end point 23 of the transfer path 21 of the flatness maintaining device 20, by the arm 8b so as to be transferred to the disc inspection device 9. At the same time, another disc 1, whose inspection has been completed, is transferred to either the non-defective product outlet part 10 or the defective product outlet part 11 by the arm 8c.

The discs which have been determined to be defective by the disc inspection device 9 are removed from the regular line, and only the discs which have been determined to be non-defective are stacked on the disc holder 2 disposed at the non-defective product outlet part 10 and are transferred to the subsequent process together with the disc holder 2.

Next, the flatness maintaining device 20 in the DVD manufacturing device having substantially the above-mentioned structure will be explained as follows.

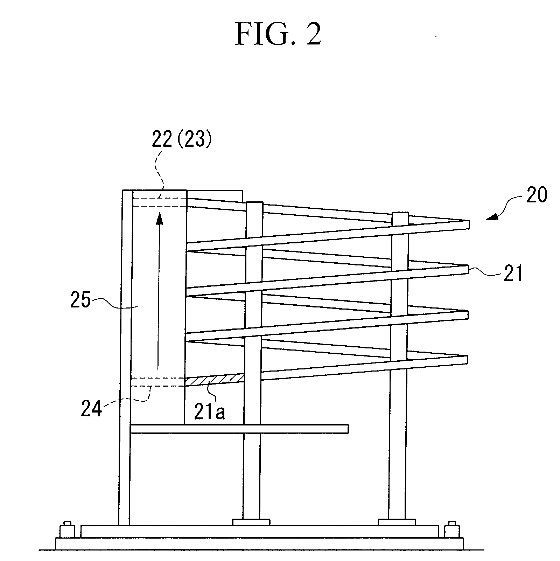

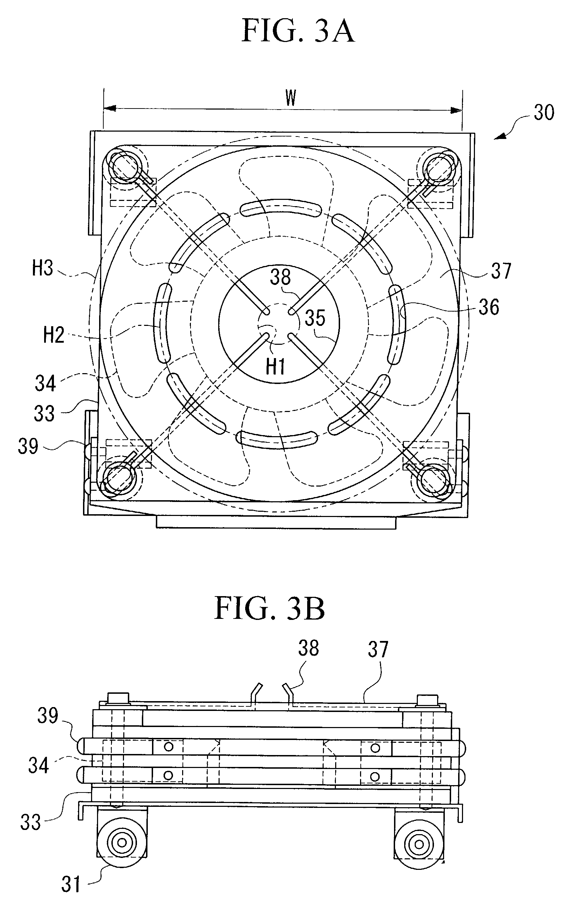

In this embodiment, the flatness maintaining device 20 has a spiral pathway 21 as shown in FIG. 2 so that the flatness maintaining unit 30 provided with wheels 31 as shown in FIG. 3B can move downwardly along the transfer path 21 in a spiral manner due to gravity from the start point 22 located at an upper position. Also, the flatness maintaining unit 30 which reaches a point 24 located at the lowest position of the transfer path 21 is lifted to the end point 23, which is located at the same height as the start point 22, by a lift 25.

FIG. 3A is a diagram showing a flatness maintaining unit viewed from the top; and FIG. 3B is a diagram showing a side view thereof.

The flatness maintaining unit 30 of this embodiment includes the wheels 31 attached to the bottom surface of a casing 33 which has an opening at the upper and lower surfaces thereof, and an electric fan 34 is disposed in the casing 33. Also, a supporting member 37 of a flat plate shape having the first hole 35 and the second holes 36 is disposed on the upper surface of the casing 33. In addition, a projection 38 which engages with a central hole H1 of the disc 1 is disposed at the center of the supporting member 37.

The first hole 35, provided with the supporting member 37, has a circular shape and a diameter larger than the diameter of the central hole H1. That is, the diameter of the first hole 35 is larger than 15 mm. In this particular embodiment, the diameter of the first hole 35 is 40 mm.

The second holes 36 are elongated holes discontinuously provided along the circumference of a circle H2 which is concentric with the first hole 35 and which has a diameter of 80 mm. The circle H2, having a diameter of 80 mm, corresponds to the outer periphery of a disc having a diameter of 80 mm. In this embodiment, the width of each of the second holes 36 in the radial direction is 4 mm.

Also, the width W of the supporting member 37 is made to be smaller than 120 mm, and a part of the edge portion of the supporting member 37 is located inward with respect to a circle H3, which is concentric with the first hole 35 and which has a diameter of 120 mm. The circle H3, having a diameter of 120 mm corresponds to the outer periphery of a disc having a diameter of 120 mm. In this embodiment, the width W of the supporting member 37 is designed to be 118 mm.

Note that although not shown in the figures, holes other than the first hole 35 and the second holes 36 may be appropriately present on the surface of the supporting member 37. A part or the entirety of these holes may be covered or not covered by the disc 1 when the disc 1 is supported on the surface of the supporting member 37.

For instance, it is possible to provide third holes (not shown in the figures) at positions along the circumference of the circle H3 having the diameter of 120 mm. If the third hole is provided, it is possible to increase the width W of the supporting member 37 to be larger than 120 mm.

It is preferable that the surface roughness Ra of the surface of the supporting member 37 be 3.0 µm or smaller. If the surface roughness Ra of the supporting member 37 is larger than 3.0 µm, there is a danger that a scratch will be generated on the disc 1 when the disc 1 is contacted with the surface of the supporting member 37. Also, it is preferable that the surface roughness Ra of the surface of the supporting member 37 be 1.5 µm or larger since if the surface roughness is too small, it becomes difficult to remove the disc 1 from the supporting member 37.

Also, electrodes 39, which protrude towards the outside, are disposed on the side surfaces of the casing 33 as shown in FIGS. 3A and 3B, and the electrodes 39 are electrically connected to a driving means for driving the fan 34.

On the other hand, contacting electrodes (not shown in the figures) are disposed along the entire transfer path 21 at positions where the contacting electrodes can make contact with the electrodes 39 while the flatness maintaining unit 30 moves along the transfer path 21. Each of the contacting electrodes has a structure by which it can supply a DC voltage to the driving means for the fan 34 via the electrodes 39 provided with the flatness maintaining unit 30 when it makes contact with the electrodes 39. Also, transmission of electrical energy to the contacting electrodes is controlled by a control device which is not shown in the figures.

In this embodiment, the length of the transfer path 21 of the flatness maintaining device 20, from the start point 22, located at the highest position thereof, to the lowest position 24, is designed so that forty-five flatness maintaining units 30 can be connected and moved in a row. Accordingly, if a flatness maintaining unit 30 moves a distance corresponding to the length of forty five flatness maintaining units 30 from the start point 22, it reaches the lowest position 24.

Also, a conveyance means 21a, such as a belt conveyer, is disposed at a location in front of the lowest position 24 of the transfer path 21 in order to control the traveling speed of the flatness maintaining units 30 on the transfer path 21. If the traveling speed of the flatness maintaining units 30 is controlled on the conveyance means 21a, it becomes possible to control the traveling speed of the flatness maintaining units 30 on the rest of the transfer path 21 excluding the conveyance means 21a.

Accordingly, the flatness maintaining unit 30 may be intermittently moved along the transfer path 21 by, for instance, repeating an operation in which the unit 30 is moved for a distance corresponding to one unit for three seconds, is stopped for one second, and again is moved for a distance corresponding to one unit for three seconds. Also, it is possible to move a plurality of the flatness maintaining units 30 along the transfer path 21 at the same time.

For the case where the flatness maintaining unit 30 is intermittently moved along the transfer path 21, the unit 30 is accelerated upon starting, and after being moved at a predetermined constant rate, is decelerated to stop, and this process is repeated. In this embodiment, the acceleration upon starting and the deceleration upon stopping (i.e., acceleration during a reduction of speed, or deceleration rate) can be controlled by using the conveyance means 21a. It is preferable that the acceleration and the deceleration of the flatness maintaining unit 30, when it is intermittently moved, be 500 cm/sec² or less. If the acceleration upon starting and the deceleration upon stopping of the flatness maintaining unit 30 exceeds 500 cm/sec², a force acts on the disc 1, which is retained on the supporting member 37, when the acceleration or deceleration becomes too large, and there is a danger that the disc 1 will move slightly on the supporting member 37. In addition, since the impulsive force generated when the flatness maintaining units 30 collide against each other upon starting or stopping becomes large, there is a danger that the disc 1 will dance on the supporting member 37. Accordingly, it becomes possible to prevent the generation of scratches on the disc 1 caused by the contact of the disc 1 with the supporting member 37 by decreasing the acceleration and the deceleration of the flatness maintaining unit 30 to 500 cm/sec² or less. From the viewpoint of preventing the generation of scratches on the disc 1, it is preferable that the acceleration and the deceleration of the flatness maintaining unit 30 be small, preferably 200 cm/sec² or less.

Also, the control device for the conveyance means 21a and the control device for controlling the transmission of electrical energy to the contacting electrodes can be linked so that electrical energy is transmitted to the contacting electrodes for only one second when the flatness maintaining unit 30 is stopped, and that the transmission of electrical energy to the contacting electrodes is stopped for three seconds while the flatness maintaining unit 30 is moving. In this manner, a DC voltage may be intermittently supplied to the fan 34 of the flatness maintaining unit 30.

Next, the operation of the flatness maintaining device 20 having the above-mentioned configuration will be explained as follows.

The disc 1 which has been subjected to the process carried out by the edge treatment device 7 is mounted on the supporting member 37 of the flatness maintaining unit 30 located at the start point 22. The disc 1 is disposed so that the central hole H1 thereof may be engaged with the projection 38 which is present at the center of the supporting member 37. At that time, for the case where the outer diameter of the disc 1 is 80 mm, the outer periphery of the disc 1 is located on the second holes 36 as indicated by the symbol H2 in FIG. 3A. Also, for the case where the outer diameter of the disc 1 is 120 mm, the outer periphery of the disc 1 partially protrudes from the supporting member 37 as indicated by the symbol H3 in FIG. 3A.

After the disc 1 is placed on the supporting member 37, a DC voltage is supplied to the fan 34 of the flatness maintaining unit 30 in order to operate the fan and start an air suction operation. In this manner, an airflow flowing from the upper side of the supporting member 37 to the lower side thereof is generated, and the disc 1 is pressed against the surface of the supporting member 37 due to the air pressure. In this manner, the disc 1 is maintained in a flat state.

The airflow flows through the first hole 35 and the periphery portion of the supporting member 37, and if the outer diameter of the disc 1 is 80 mm, it also flows through the second holes 36. Accordingly, the effect of the air pressure is exerted, in an effective manner, on both the outer periphery portion and the inner periphery portion of the disc 1, the outer diameter of which can be 80 mm or 120 mm, for instance. Hence, the disc 1 can be maintained in a flat state in a more accurate manner.

The flatness maintaining unit 30 moves along the transfer path 21 from the upper side to the lower side thereof in a spiral manner while maintaining the disc 1 in a flat state. During this period, a plurality of the flatness maintaining units 30 are intermittently moved along the transfer path 21 at the same time, and only when the units 30 are stopped, is a DC voltage intermittently supplied to the fan 34 of the flatness maintaining unit 30. Since the fan 34 keeps rotating while the supply of electric power is stopped due to inertia, the retaining force for the disc 1 can be maintained.

The flatness maintaining unit 30 which reaches the lowest position 24 of the transfer path 21 is lifted to the start point 22 by the lift 25. While the unit 30 is lifted by the lift 25, no electricity is supplied to the fan 34, and hence, the fan 34 is decelerated and stopped to release the disc 1 from its flat state.

When the flatness maintaining unit 30 is conveyed to the end point 23 (i.e., the start point 22), the disc 1 is removed from the supporting member 37 by the transfer device 8, and is conveyed to the inspection device 9.

After the disc 1 is removed from the supporting member 37 of the flatness maintaining unit 30, another disc, which has been subjected to the process carried out by the edge treatment device 7, is placed on the flatness maintaining unit 30 so that the unit 30 can be repeatedly used for the subsequent process in which the disc 1 is maintained in a flat state in the same manner as explained above.

In this embodiment, since the flatness maintaining unit 30 moves a distance corresponding to the length of the unit for three seconds and stops for one second, it takes four seconds in total for the unit 30 to move the distance corresponding to one unit. Accordingly, it takes 180 seconds (i.e., four seconds × 45 units) or three minutes for the flatness maintaining unit 30 to travel from the start point 22 to the lowest point 24. Thus, the disc 1 is maintained in a flat state for three minutes on the flatness maintaining unit 30, and curing of the cationic type ultraviolet curable composition proceeds during this period of time to bond the disc 1.

Note that although the transfer path 21 of the flatness maintaining device 20 has a spiral structure in the above embodiment, various kinds of structures may be adopted for the transfer path which forms the circulation path. Also, the transfer path can be a non-circulation path whose start point and end point are located at different positions. Also, although the flatness maintaining unit 30 is provided with wheels 31 and the transfer path 21 is inclined so that the flatness maintaining unit 30 can move due to gravity in the above-explained embodiment, the structure for moving the flatness maintaining unit 30 is not limited only to such a configuration. For instance, it is possible to move the flatness maintaining unit 30 by moving the transfer path itself without providing the height difference for the transfer path. If the transfer path 21 is made in a spiral shape, the space required for accommodating the flatness maintaining device 20 can be reduced, and energy may be saved if the flatness maintaining unit 30 is moved utilizing gravity.

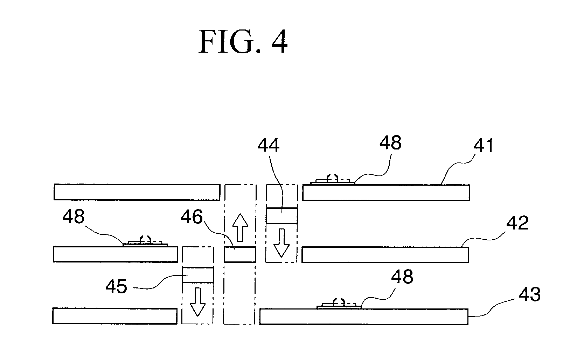

FIG. 4 is a diagram showing a flatness maintaining device according to the second embodiment of the present invention. In FIG. 4, the flatness maintaining device is different from the flatness maintaining device 20 of the first embodiment in that the transfer path thereof is not inclined and that it has triplicate circling paths 41, 42, and 43 provided with a first lifting device 44 which ascends and descends between the upper circling path 41 and the middle circling path 42, a second lifting device 45 which ascends and descends between the middle circling path 42 and the lower circling path 43, and a third lifting device 46 which ascends and descends between the upper circling path 41 and the lower circling path 43. In this embodiment, a flatness maintaining unit 48 has the same structure as the structure of the flatness maintaining unit 30 in the first embodiment.

A plurality of the flatness maintaining units 48 are movably provided with each of the circling paths 41, 42, and 43. Each of the flatness maintaining units 48, onto which the disc 1 is placed, moves along the circling paths 41, 42, and 43 in that order, and finally returns to the upper circling path 41. Also, a transfer device (not shown in the figure), which moves the flatness maintaining unit 48 for a predetermined distance in a predetermined traveling direction, is intermittently provided with the circling paths 41, 42, and 43 so that the flatness maintaining units 48 may be intermittently moved. The speed at which the flatness maintaining unit 48 is moved by the transfer device may be controlled by a control device which is not shown in the figure.

In this embodiment also, it is preferable that the acceleration and the deceleration of the flatness maintaining unit 48 be 500 cm/sec² or less, more preferably 200 cm/sec² or less when it is intermittently moved along the circling paths 41, 42, and 43. In this manner, it becomes possible to decrease the force exerted on the plate member retained by the supporting member and the impulsive force generated when the supporting members collide against each other so as to prevent the plate member from moving on the supporting member. Accordingly, it becomes possible to prevent the generation of scratches on the plate member due to the contact of the plate member with the supporting member.

According to the flatness maintaining device of this embodiment, the disc 1, which has been subjected to the edge treatment process, is mounted on the flatness maintaining unit 48 which is located at an inlet position of the upper circling path 41. The flatness maintaining unit 48, on which the disc 1 is mounted, travels along one half of the upper circling path 41 to be placed on the first lifting device 44. Then, the first lifting device 44 on which the flatness maintaining unit 48 is mounted, descends to the middle circling path 42. The flatness maintaining unit 48 which has descended to the middle circling path 42 travels along the middle circling path 42 in the reverse direction to be placed on the second lifting device 45. The second lifting device 45 on which the flatness maintaining unit 48 is mounted descends to the lower circling path 43. The flatness maintaining unit 48 which descends to the lower circling path 43 travels along the lower circling path 43 in the reverse direction to be placed on the third lifting device 46. The third lifting device 46 on which the flatness maintaining unit 48 is mounted ascends to the upper circling path 41. The flatness maintaining unit 48 which returns to the upper circling path 41 travels along the other half of the upper circling path 41 to be placed at an outlet position.

Accordingly, while the flatness maintaining unit 48 travels from the inlet position to the outlet position, the disc 1 on the flatness maintaining unit 48 is maintained in a flat state, and curing of the ultraviolet curable composition progresses during this period to bond the disc 1. After curing of the composition is completed for the disc 1 on the flatness maintaining device, the disc 1 is removed from the flatness maintaining unit 48, which has arrived at the outlet position, and is transferred to the disc inspection device 9.

According to this embodiment, since a configuration is adopted in which the transfer path of the flatness maintaining device is not particularly inclined, and the flatness maintaining unit 48 is moved in a horizontal direction on the circling path, it has an advantage in that the speed at which the flatness maintaining unit 48 is moved can be easily controlled.

Having thus described several exemplary embodiments of the invention, it will be apparent that various alterations, modifications, and improvements will readily occur to those skilled in the art. Such alterations, modifications, and improvements, though not expressly described above, are nonetheless intended and implied to be within the spirit and scope of the invention. Accordingly, the invention is limited and defined only by the following claims and equivalents thereto.

## Claims

1. A method for maintaining a plate member in a flat state, comprising the steps of:
placing said plate member on a surface of a supporting member, the surface of said supporting member being in a flat state and having at least one hole penetrating through the surface, and
sucking air from a back side of the surface of said supporting member to generate an airflow flowing from a front side of the surface towards the back side of the surface via the hole so as to retain said plate member on the surface of said supporting member.

2. A method for maintaining a plate member in a flat state according to claim 1, wherein
said plate member is a disc substrate, and the airflow is generated at least at an inner periphery portion and an outer periphery portion of said disc substrate.

3. A method for maintaining a plate member in a flat state according to claim 1, wherein a surface roughness Ra of the surface of said supporting member is about 3.0 µm or less.

4. A method for maintaining a plate member in a flat state according to claim 1, further comprising the steps of:
retaining said plate member on the surface of said supporting member at a first point, and
removing said plate member from said supporting member at a second point after moving said supporting member along a transfer path.

5. A method for maintaining a plate member in a flat state according to claim 4, further comprising the step of:
placing another plate member on the surface of said supporting member at the first point after said plate member is removed from said supporting member at the second point so as to repeatedly use said supporting member.

6. A method for maintaining a plate member in a flat state according to claim 5, wherein
a plurality of said supporting members, which retain said plate member, are disposed on said transfer path at the same time.

7. A method for maintaining a plate member in a flat state according to claim 4, wherein
an electric fan is integrally provided with said supporting member, and
contacting electrodes which supply electric power to said fan are disposed on said transfer path so that the airflow is generated by operating said fan.

8. A method for maintaining a plate member in a flat state according to claim 7, wherein a DC voltage is intermittently supplied to said fan on said transfer path.

9. A method for maintaining a plate member in a flat state according to claim 8, wherein
said supporting member is intermittently moved along said transfer path so that a DC voltage is supplied to said fan when said supporting member is stopped.

10. A method for maintaining a plate member in a flat state according to claim 9, wherein
acceleration and deceleration of said supporting member intermittently moving along said transfer path are 500 cm/sec² or less.

11. A method for manufacturing a disc by adhering two disc substrates together using an ultraviolet curable composition as an adhesive, comprising the steps of:
applying the ultraviolet curable composition onto at least a part of an adhering surface of at least one of said disc substrates;
radiating an ultraviolet light onto the applied ultraviolet curable composition;
superimposing said two disc substrates so as to sandwich the ultraviolet curable composition;
spreading the ultraviolet curable composition between said disc substrates; and
maintaining said two disc substrates in a flat state using a method for maintaining a plate member in a flat state as claimed in claim 1, said two disc substrates are considered as said plate member.

12. A method for manufacturing a disc according to claim 11, wherein said disc is a digital versatile disc (DVD).

13. A flatness maintaining unit for a plate member, comprising:
a supporting member having a flat surface provided with at least one hole penetrating through the flat surface; and
an air-suction device provided with said supporting member, said air-suction device drawing air to generate an airflow flowing from a front side of the flat surface towards a back side of the flat surface via the hole so that said plate member is retained on the flat surface of said supporting member when said plate member is placed on said supporting member.

14. A flatness maintaining unit for a plate member according to claim 13, wherein
said plate member is a disc substrate,
said at least one hole provided with said flat surface of said supporting member is a first hole which is larger than a central hole of said disc substrate, and
at least a part of an outer periphery portion of said disc substrate is located outside an edge portion of said supporting member when said disc substrate is placed on said supporting member so that the center of said disc substrate is aligned with the center of said first hole.

15. A flatness maintaining unit for a plate member according to claim 13, wherein
said plate member is a disc substrate,
said at least one hole provided with said flat surface of said supporting member is a first hole which is larger than a central hole of said disc substrate, and
the other of said at least one hole is provided with said flat surface located at a position where at least a part of the other of said at least one hole is covered by an outer periphery portion of said disc substrate when said disc substrate is placed on said supporting member so that the center of said disc substrate is aligned with the center of said first hole.

16. A flatness maintaining unit for a plate member according to claim 15, wherein
the diameter of said first hole is larger than 15 mm,
said flat surface of said supporting member is provided with second holes at positions along the circumference of a circle having a diameter of 80 mm which is concentric with said first hole, and
at least a part of the edge portion of said supporting member is located inside a circle having a diameter of 120 mm which is concentric with said first hole.

17. A flatness maintaining unit for a plate member according to claim 15, wherein
the diameter of said first hole is larger than 15 mm,
said flat surface of said supporting member is provided with second holes at positions along the circumference of a circle having a diameter of 80 mm which is concentric with said first hole, and
said flat surface of said supporting member is provided with third holes at positions along the circumference of a circle having a diameter of 120 mm which is concentric with said first hole.

18. A flatness maintaining unit for a plate member according to claim 13, wherein a surface roughness Ra of the surface of said supporting member is about 3.0 µm or less.

19. A flatness maintaining device for a plate member, comprising:
a flatness maintaining unit according to claim 13;
a transfer path along which said flatness maintaining unit moves;
a mounting device which places said plate member on the flat surface of said supporting member of said flatness maintaining unit at a first point on said transfer path, and
a removing device which removes said plate member from said supporting member of said flatness maintaining unit at a second point on said transfer path.

20. A flatness maintaining device for a plate member according to claim 19, wherein
said transfer path is a circulation path; and
another plate member is mounted on said flatness maintaining unit, from which said plate member is removed at the second point, at the first point on said transfer path.

21. A flatness maintaining device for a plate member according to claim 20, wherein a plurality of said flatness maintaining units are disposed on said transfer path at the same time.

22. A flatness maintaining device for a plate member according to claim 19, wherein
an electric fan is integrally provided with said supporting member as an air-suction device, and
contacting electrodes which supply electric power to said fan are disposed on said transfer path.

23. A flatness maintaining device for a plate member according to claim 22, further comprising:
a device which intermittently moves said flatness maintaining unit along said transfer path.

24. A flatness maintaining device for a plate member according to claim 23, further comprising:
a control device which controls acceleration and deceleration of said supporting member intermittently moving along said transfer path so that the acceleration and deceleration are 500 cm/sec² or less.

25. A disc manufacturing device which manufactures a disc by adhering two disc substrates together using an ultraviolet curable composition as an adhesive, comprising:
an application unit which applies the ultraviolet curable composition onto at least a part of an adhering surface of at least one of said disc substrates;
an ultraviolet light radiation unit which radiates an ultraviolet light onto the applied ultraviolet curable composition;
a unit which superimposes said two disc substrates so as to sandwich the ultraviolet curable composition;
a spreading unit which spreads the ultraviolet curable composition between said disc substrates; and
a flatness maintaining device for a plate member as claimed in claim 19, said two disc substrates are considered as said plate member.
